# EUROPEAN PATENT APPLICATION

(11) **EP 3 763 920 A1**
(43) Date of publication of application: **13.01.2021**
(21) Application number: 19185326.6
(22) Date of filing: 09.07.2019
(51) Int. Cl.: F01M 13/00, F01M 13/04, B01D 35/147, F16K 15/14

(54) **CRANKCASE VENTILATION VALVE**

(71) Applicant: Mann+Hummel GmbH, 71636 Ludwigsburg (DE)
(72) Inventor: VENKATESH NAYAK, Hemanth Kumar, 571124 Mysore (IN); SAVADATTI, Pramod, 580001 Dharwad (IN); SAVANUR RAGHAVENDRA RAO, Srikanth, 560085 Bangalore (IN); PRAHLAD, Praveen, 560060 Bangalore (IN); MELDE, Markus, 67346 Speyer (DE)
(74) Representative: Seyboth, Matthias

(57) **Abstract**

A crankcase ventilation valve comprises a membrane element with a metal support washer and a conical spring, the end face of which acts on the support washer.

## Description

### Technical Area

The invention relates to a crankcase ventilation valve comprising a valve element mounted on a ventilation aperture in the crankcase. The invention also relates to a crankcase with a crankcase ventilation valve.

### Prior Art

US 2002/0000249 A1 discloses a crankcase ventilation valve for the crankcase of an internal combustion engine including a valve seat, a closure plate cooperating with the valve seat, a conical spring whose front face with larger diameter is acting upon the closure plate, and a cover to be fixed to the crankcase and supporting the opposite end of the conical spring.

DE 10 2013 005 624 A1 discloses a crankcase ventilation valve comprising a membrane which is provided with a slot which allows a reduction of pressure differences.

It is an object of the invention to provide a crankcase ventilation valve which is designed in a simple and reliable way.

### Disclosure of the Invention

According to the invention, a crankcase ventilation valve is provided which includes a valve element to be placed on a ventilation aperture in the crankcase. The crankcase ventilation valve also includes a conical spring whose front face with larger diameter acts on the valve element. The crankcase ventilation valve also includes a cover to be fixed to the crankcase, the cover supporting the opposite end of the conical spring. The conical spring acts with its larger diameter on the valve element at its front end and with its smaller diameter on the cover at the opposite end.

According to the invention, the valve element is designed as a membrane or membrane element that carries a support washer. The support washer is made of metal and supports the conical spring.

The advantage of this design is that the metal support washer enables uniform force transmission of the spring force. The spring force of the conical spring is evenly transmitted to the membrane element via the support washer. Asymmetrical force transmission on the membrane element is avoided. The washer may also be made of sheet materials that have mechanical properties similar to sheet metal and thus are also suitable to support the spring, for example fiber reinforced plastics.

Another advantage of this design is that the membrane element, which forms the valve element, is flexible and can deform under pressure. The conical spring presses the membrane element into the sealing position on the aperture in the crankcase. If the gas pressure exceeds the spring force of the conical spring, the membrane element lifts off from the ventilation aperture so that a pressure equalization can take place. During lifting, the membrane element is either deformed so that the ventilation aperture is released. Or the membrane element as a whole lifts off from the ventilation aperture and is displaced against the force of the conical spring.

It is another advantage that the metal support washer is integrated into the membrane element. The support washer is supported by the membrane element, so that no additional fastening measures for the support washer are necessary.

It is another advantage that the spring element is designed as a conical spring. Compared to a coil spring, the conical spring has a higher stability in lateral direction. The danger of the conical spring deforming laterally is reduced.

The end face of the conical spring with a larger diameter is in contact with the metal support washer. When the conical spring is compressed, at least the second spring coil comes into contact with the support washer in addition to the first spring coil. As a result, the spring force is induced over a larger area on the support washer. The force is introduced into the support washer in a uniform manner so that the risk of the support washer tilting is reduced.

In an advantageous embodiment, the supporting washer is encapsulated by the material of the membrane element. This has the advantage that a combination of support washer and membrane element is already achieved during manufacture and the support washer is firmly held in the membrane element. It is not necessary to retrofit the support washer.

The material of the membrane element is preferably injection moulded around the support washer.

In another preferred embodiment, the radial outside of the support washer is enclosed by the material of the membrane element. This ensures an even reception of the supporting disc in the membrane element and even force transmission from the supporting disc into the membrane element.

According to another preferred embodiment, the cover on which the conical spring is supported has a guide element for guiding and centering the conical spring. This is advantageous as the position of the conical spring is fixed at the cover and the position of the longitudinal axis of the conical spring will be maintained when compressed. This reduces the risk of the conical spring tilting.

The guide element on the cover is designed as a cylinder, in particular as a hollow cylinder. The conical spring is mounted on the cylindrical guide element so that the guide element projects into the conical spring.

The cover is preferably designed as a plastic component.

According to another preferred embodiment, the membrane element consists of a rubber material, for example a natural rubber material like caoutchouc. The support washer is made of a metal such as sheet metal.

According to another preferred embodiment, the conical spring has a minimum conicity. For example, it may be advantageous that the ratio of the maximum diameter at one end of the conical spring to the minimum diameter at the opposite end of the conical spring is at least 1.5. This ensures that when the conical spring is compressed, successive conical turns lie radially within the adjacent conical turn.

In another preferred embodiment, the support washer is axially completely integrated into the membrane element. The support washer therefore does not protrude axially beyond the side surface of the membrane element. The axial thickness is determined by the membrane element.

The invention also refers to a crankcase with a crankcase ventilation valve as described above, which is arranged on the crankcase. The membrane element of the crankcase ventilation valve sits on the ventilation aperture in the crankcase and closes the ventilation aperture as long as the pressure is less than the force of the conical spring. The cover is also fastened to the crankcase so that the force of the conical spring is transmitted through the cover into the crankcase.

### Short Description of the Drawings

A description will now be given as a non-limiting example of a form of embodiment of a plug-in-connection according to the present invention. Reference will be made to the attached drawings, in which:
Fig. 1 is a prospective view of a crankcase including a crankcase ventilation valve according to the invention in an exploded view,
Fig. 2 is a flight view of the crankcase including the crankcase ventilation valve,
Fig. 3 is an enlarged sectional view of the crankcase ventilation valve,
Fig. 4 is a prospective view of the outside of a cover of the valve,
Fig. 5 is a prospective view of the inside of a cover,

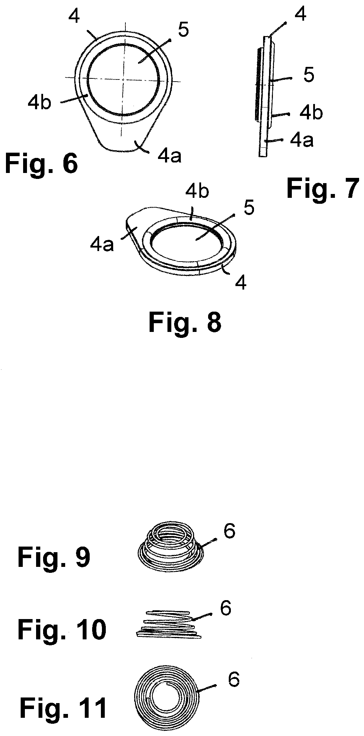

Fig. 6 is a plan view of a membrane element of the valve,
Fig. 7 is a side view of the valve,
Fig. 8 is a prospective view of the valve,
Fig. 9 is a prospective view of a conical spring of the valve,
Fig. 10 is a side view of the conical spring,
Fig. 11 is a plan view of the conical spring.

In the figures, same components are provided with the same reference characters.

### Embodiments of the Invention

On the crankcase 1 a crankcase ventilation valve 2 is arranged, which is placed on a ventilation aperture 3 in the side area of the crankcase 1. The crankcase ventilation valve 2 comprises a membrane element 4 with an integrated support washer 5, a conical spring 6 and a cover 7. The membrane element 4 is placed on the ventilation aperture 3 in the crankcase 1. A spring force exerted by the conical spring 6 acts on the membrane element 4, pressing it in a closing position on the ventilation aperture 3. The end face of the conical spring 6 with its larger diameter is supported by the support washer 5 in the membrane element 4. The opposite face of the conical spring 6 is supported on the inside of the cover 7.

Membrane element 4 consists of a rubber material such as HNBR. The support washer 5 is made of metal, in particular sheet metal.

The ventilation aperture 3 is located in a receptacle 8 of the crankcase 1 in which the membrane element 4 is inserted. The receptacle 8 also serves to receive and fasten the cover 7. The spring force of the conical spring 6 presses the membrane element 4 into the seat in the receptacle 8 via the support washer 5 and thereby closes the ventilation aperture 3. At the opposite end, the conical spring 6 is supported in the cover 7. The spring force is conducted via the cover 7 into the receptacle 8 on the crankcase 1.

The metal support washer 5 is round and has a circumferential, axially projecting edge. The support plate 5 is completely accommodated in the membrane element 4. The radial outside of the support washer 5 is completely surrounded by the material of the membrane element 4. In the axial direction, the support plate 5 does not project beyond the membrane element 4.

The membrane element 4 has a semicircular outer contour and a section 4a which is radially widened. The ventilation aperture 3 is round, the mounting 8 has a contour which corresponds to the contour of the membrane element 4. The cover 7 has a corresponding contour, too.

The membrane element 4 and the support washer 5 form a combined component. The support washer 5 is overmoulded by the material of the membrane element 4 which is preferably done by injection moulding.

The conical spring 6 has a conicity that the ratio of the maximum diameter at one end of the conical spring 6 to the minimum diameter at the opposite end of the conical spring 6 is at least 1.5. The conicity of the conical spring 6 is such that when the conical spring 6 is compressed, adjacent spring coils lie radially in each other.

The combination of conical spring 6 and support washer 5 made of metal and integrated in membrane element 4 has the advantage that tilting of conical spring 6 and membrane element 4 can be avoided. The spring force of the conical spring 6 is distributed over a relatively large area on the support washer 5. Punctual forces on the support washer 5 can be avoided.

On the inside of the cover 7 there is a guide element 9, which is designed as a hollow cylinder. The guide element 9 may have a low conicity. The guide element 9 serves to accommodate the cone spring 6 at its end with minimum diameter. The conical spring 6 is guided and centred on the guide element 9, which further reduces the risk of tilting of the conical spring 6. The guide element 9 projects into the conical spring 6.

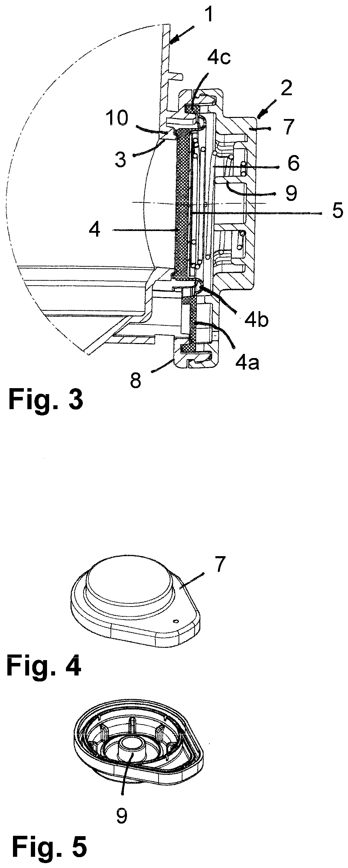

The membrane element 4 has an axially projecting ring 4b on its side facing the conical spring 6, which surrounds the support washer 5. On its radial outer side, the ring 4b expands to form a circumferential fastening section 4c (Fig. 3), which is accommodated in a recess in the receptacle 8 and fixed by the cover 7 for connecting firmly the outer edge of the membrane element 4 to the crankcase 1.

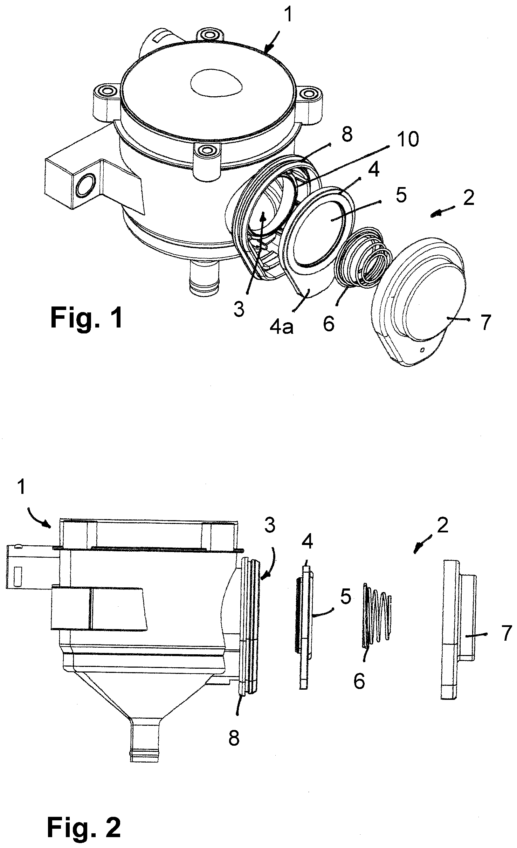

The support washer 5 has a diameter which is larger than the diameter of the ventilation aperture 3. The membrane element 4 is supported by a side edge 10 (Fig. 1, 3), and the support washer 5 is also supported by side edge 10. The spring forces exerted by the conical spring 6 are thus transmitted from the support washer 5 via the membrane element 4 to the side edge 10 of the receptacle 8.

## Claims

1. Crankcase ventilation valve, comprising a valve element (4) to be placed on a ventilation aperture (3) in the crankcase (1), a conical spring (6) whose front face with larger diameter is acting upon the valve element (4), and a cover (7) to be fixed to the crankcase (1) and supporting the opposite end of the conical spring (6), **characterized in that** the valve element (4) is designed as a membrane element (4) which carries a support washer (5), wherein the support washer (5) is made of metal and supports the conical spring.

2. Crankcase ventilation valve according to claim 1, **characterized in that** the support washer (5) is overmoulded by the material of the membrane element (4).

3. Crankcase ventilation valve according to claim 1 or 2, **characterized in that** the support washer (5) is injection-moulded by the material of the membrane element (4).

4. Crankcase ventilation valve according to claim 1 to 3, **characterized in that** the radial outside of the support washer (5) is surrounded by the material of the membrane element (4).

5. Crankcase ventilation valve according to claim 1 to 4, **characterized in that** the support washer (5) is axially completely integrated into the membrane element (4).

6. Crankcase ventilation valve according to claim 1 to 4, **characterized in that** one side of the cover (7) facing the conical spring (6) has a guide element (9) for guiding and centering the conical spring (6).

7. Crankcase ventilation valve according to claim 5, **characterized in that** the guide element (9) is designed as a cylinder or cone.

8. Crankcase ventilation valve according to claim 1 to 6, **characterized in that** the membrane element (4) is made of a rubber material.

9. Crankcase ventilation valve according to claim 1 to 7, **characterized in that** the ratio of the maximum diameter on one end of the conical spring (6) to the minimum diameter on the opposite end of the conical spring (6) is at least 1.5.

10. Crankcase ventilation valve according to claim 1 to 8, **characterized in that** the support washer (5) is made of sheet metal.

11. Crankcase comprising a crankcase ventilation valve (2) according to claim 1 to 9.
